(19) Europäisches Patentamt
European Patent Office
Office européen des brevets

(11) **EP 1 166 304 B1**

(12) **EUROPEAN PATENT SPECIFICATION**

(45) Date of publication and mention
of the grant of the patent:
**29.08.2007 Bulletin 2007/35**

(51) Int Cl.:
***H01H 9/50*** *(2006.01)*     ***H02B 13/065*** *(2006.01)*

(21) Application number: **00925786.6**

(22) Date of filing: **27.03.2000**

(86) International application number:
**PCT/SE2000/000593**

(87) International publication number:
**WO 2000/065622 (02.11.2000 Gazette 2000/44)**

(54) **A METHOD FOR PRODUCING A DEVICE FOR DETECTING ARCS**

VERFAHREN ZUR HERSTELLUNG EINER VORRICHTUNG ZUR ERFASSUNG VON LICHTBÖGEN

METHODE DE PRODUCTION D'UN DETECTEUR D'ARCS

(84) Designated Contracting States:
**AT BE CH CY DE DK ES FI FR GB GR IE IT LI LU MC NL PT SE**

(30) Priority: **14.04.1999 SE 9901314**

(43) Date of publication of application:
**02.01.2002 Bulletin 2002/01**

(73) Proprietor: **ABB AB**
**721 83 Västerås (SE)**

(72) Inventor: **MATTSSON, Sigvard**
**S-724 71 Västerås (SE)**

(74) Representative: **Olsson, Jan et al**
**Bjerkéns Patentbyra KB**
**P.O.Box 1274**
**801 37 Gävle (SE)**

(56) References cited:
**EP-A1- 0 537 074          US-A- 4 516 022**
**US-A- 4 798 445**

- **DATABASE WPI Week 199617, Derwent Publications Ltd., London, GB; Class S01, AN 1996-169491, XP002905650 & JP 8 051 708 A (NISSIN ELECTRIC CO LTD) 20 February 1996**
- **DATABASE WPI Week 199518, Derwent Publications Ltd., London, GB; Class S01, AN 1995-135654, XP002905651 & JP 7 059 221 A (MEIDENSHA CORP) 03 March 1995**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION AND PRIOR ART

The invention relates to a method for producing a device for detecting arcs in electric devices and installations. Such a device is known through JP 8 051 708 A.

In electric devices and installations there is a need of detecting the creation of arcs. This need is met through so called arc guards. A conventional arc guard is a device comprising a light collector, which collects light from the possible arc and directs it towards a light conductor. The light conductor is preferably an optical fibre and forms a part of the arc guard. The light conductor conducts the light further to an arrangement for converting light into electrical signals, which in its turn are utilized for controlling the electrical device or installation, for example for activating a breaker for breaking the current to the entire or a part of the electrical device or installation. The arc guard preferably comprises also the converting arrangement.

The light conducted by the optical fibre is damped as a consequence of absorption and light spreading in the fibre. The absorption takes place in impurities, such as metals, water rests, and organic molecules. The absorbed light power is transformed into heat in the fibre. At the fibre end receiving light there is also reflection against the end surface, spreading losses when the fibre surface is uneven and absorption caused by dust and dirt on the fibre end.

The total damping of the optical fibre is accordingly dependent upon the length thereof. The longer fibre the greater total damping. The light collecting ability of the light collector should therefore for a given arc be adjusted with respect to the length of the optical fibre. Accordingly, optical fibres being too long require a high light sensitivity of the light conductor.

The prior art comprises a light detector body, i.e. light collector, consisting of a semi-transparent plastic. The light detector body has the form of a cylinder tapering towards and being rounded at the light receiving free end thereof. It is in the opposite end provided with a thinner, cylindrical foot portion adapted to be inserted in a container, in which one end of the optical fibre is fixated or secured. The holder defines a sleeve of opaque plastic material. The holder is arranged so that an air slot will be present between the fibre end and the foot of the light detector body.

As a consequence of the air slot light directed towards the end of the optical fibre is, however, spread and damped, which results in a restricted sensitivity of the device. For improving the sensibility experiments have been done where the fibre end has been displaced to intermediate bearing against the detector end. A somewhat improved but still too restricted sensitivity was possible to be registered.

With a device of the type described it is also difficult to adjust the light transmission from the light collector to the fibre end so that the sensitivity thereof will be high independently of the length of the optical fibre.

SUMMARY OF THE INVENTION

The object of the present invention is to provide a method of the type defined in the preamble of the appended independent claims, which addresses the problem that the length allowed for an optical fibre of such a device may vary and that this may influence the very detection and the light transmission of such a device negatively and solves it to at least a large extent. This object is according to the invention obtained by providing methods according to appended claims 1 and 6.

By providing a fixed relationship between the depth of said recess and the length of an optical fibre intended to be received by the detector body making the sensitivity of the device substantially independent of said length by making said depth increasing with an increasing said length, it is considered that the damping of the light in the optical fibre is depending upon the length, and it is ensured that the total damping of the light in the light detector body and the optical fibre is kept substantially constant by changing the sensitivity of the light detector body. More exactly, long optical fibres have a larger damping influence upon the light transmitted therein, so that this may then in accordance with the invention be compensated by increasing the light sensitivity of the light detector body by changing the depth of said recess to a required extent.

By combining this feature with an arrangement of a substantially opaque cover member adapted to be applied onto and cover a part of the light detector body when the depth of the recess is below a given threshold value, it may be ensured that it will be possible to obtain a substantially constant light damping of a device according to the invention independently of the length of an optical fibre included therein, since for optical fibres of such a length requiring a smaller depth it is by this avoided that the light detector gets laterally more sensitive than from the front thereof.

Thus, the invention enables an optimum adaption of a device for detecting arcs in electric devices and installations to the length of the optical fibre being intended to be introduced into the recess in the light detector body of said device.

According to an embodiment the fibre surface of the end of the optical fibre- is melted before this is introduced into the recess. Unnecessary light damping of the fibre end as a consequence of different surface defects is thereby avoided, and the fibre may absorb more light, since it flows out somewhat and receives a larger surface in connection with such a melting. The fibre end may for the same reasons advantageously also be polished before positioned in the light detector body. The invention also comprises a method for producing a set of devices according to appended claim 6.

Further features and advantages of the invention will appear from the following description and the other dependent claims.

BRIEF DESCRIPTION OF THE DRAWINGS

The invention is now to be described for the sake of exemplifying with respect to the appended drawings, in which:

Fig 1 is a lateral view of a light detector body and a holding member according to the prior art,

Fig 2 is a side cross section view of the holding member and the detector body according to Fig 1 separated from each other,

Fig 3 is a cross section view from the side of a light detector body according to the invention, and

Fig 4 is a side-elevation of the light detector body according to Fig 3, connected to an optical fibre.

DETAILED DESCRIPTION OF AN EMBODIMENT

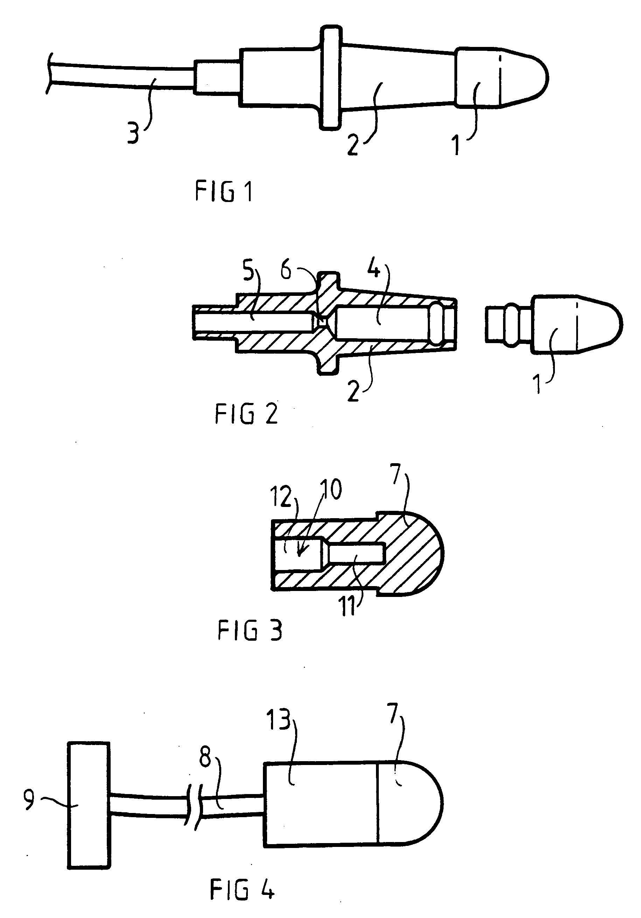

Figs 1 and 2 show a detector body 1 of a light damping and light spreading material, a holding member 2 of a non-transparent plastic material, and an optical fibre 3 adapted to conduct light to an arrangement not shown for conversion of electrical signals for controlling one or several breakers of an electrical device or installation. The light detector body 1, the holding member 2, the light conductor 3 and said conversion arrangement form an arc guard of the electrical device or installation.

It appears from Fig 2 that the light detector body 1 is designed as a plug adapted to be inserted into and fixed in a recess in one end of the holding member 2. A recess 5 for receiving the light conductor 3 is arranged in the opposite end of the holding member 2. A channel 6 is arranged between the two recesses 4 and 5, so that an air gap will be present between the light detector body 1 and the light conductor 3 when these are inserted in their respective recesses 4 and 5.

Figs 3 and 4 show schematically an embodiment of the device according to the invention. The device comprises a light detector body 7, a light conductor 8 and an arrangement 9 for converting light signals into electric signals, preferably for controlling one or more breakers or switches of an electric device or installation (not shown).

The light detector body 7 has the shape of a cylinder with a substantially semi-spherical shape at one end thereof. Substantially the same sensitivity of the device within a space angle of $2\pi$ sr may be obtained thanks to this shape, i.e. a semi-sphere, for the light inciding against the detector body. A recess 10 extends from the opposite end of the light detector body 7 in the direction towards the semi-spherical end. The recess 10 is arranged for receiving the light conductor 8. The recess 10 defines a hole having an inner portion 11 with inner dimensions substantially corresponding to the dimensions of the end of the light conductor 8 to be positioned in the recess 10. The recess 10 also comprises a mouth portion 12, which has larger inner dimensions than the inner portion 11. When the light conductor 8 is inserted in the recess 10 it is preferably that far introduced that it reaches or is located close to the bottom of the inner recess portion 11. Air gaps damping light are avoided.

The depth of the recess 10 is adapted to the length of the light conductor 8. The light conductor 8 is preferably an optical fibre, the damping of which may be described through the equation

$$\log P(x) = \log P_0 - \alpha x / 10,$$

where $P(x)$ is the intensity of the light, $x$ is the length in metres from the fibre end, $P_0$ is the intensity of the light when it has exactly entered the fibre ($x = 0$) and $\alpha$ is the damping coefficient in decibel/metre, which varies for different fibres and different wave lengths.

The proposed detector body has a hole depth in the order of 10 mm for a fibre length in the order of 1-2 m, 12 mm for a fibre length of 4-10 m, 13 mm for a fibre length of 15-20 m and 15 mm for a fibre length of 25-40 m. The total length of the detector body is then about 20 mm and the radius of the semi-sphere is about 5 mm. The cylinder defining the detector body has along a substantial part of the length thereof reduced outer dimensions, with a diameter in the order of 8 mm. The mouth portion 12 has a diameter of about 4 mm and the inner portion 11 a diameter of about 2,5 mm. The transition between the inner portion 11 and the mouth portion 12 defines a truncated cone, which promotes guiding of the light conductor 8 when it is introduced into the inner portion 11.

The detector body 7 is preferably mainly made of a semi-transparent plastic material with ability to damp and spread light from for example an arc towards the end of the light conductor 8 arranged inside the light detector body 7. Said plastic comprises polyoxymethylene (POM) in the embodiment shown. The polymer is preferably UV-stabilized for being able to take light influence from primarily arcs.

The device comprises for smaller hole depths a substantially opaque cover member 13 adapted to be applied onto and cover a part of the detector body when the depth of the recess 10 is below a given threshold value, so that detectors having a small hole depth will not get more sensitive from the side than from the front. The cover member 13 has in the preferred embodiment the shape of a sleeve or girdle surrounding at least a part of the portion of the detector body 7 having the reduced outer diameter. The cover member applied is shown in Fig 4.

The light detector 8 is fixed inside the recess 10, either through gluing or clamping by a contact pressing tool of at least a part of the portion of the detector body 7 surrounding the recess 10, preferably at the transition between the inner recess portion 11 and the mouth portion 12.

The device according to the invention, and in particular the detector body 7, is preferably adapted to detect arcs in an electric device or installation. The device comprises preferably only electrically non-conducting material in the region of and about the light detector body 7. It is hereby suitable for devices in which intermediate or high voltage applications are a part.

A number of alternative embodiments will of course be apparent for a man skilled in the art without departing from the idea of the invention. The scope of protection of the invention appears from the appended claims, with support from the description and the appended drawings.

### Claims

1. A method for producing a device for detecting arcs in electric devices or installations, in which a substantially solid light detector body (7) of a light damping and light spreading material is provided with a recess (10) for receiving an optical fibre (8) adapted to conduct light directed thereagainst through the light detector body (7), *characterized* **in that** the depth of said recess (10) is chosen while considering the length of said optical fibre (8) for making the sensitivity of the device substantially independent of said length by making said depth increasing with an increasing said length, and that a substantially opaque cover member (13) is applied onto a portion of the light detector body (7) when said depth of the recess (10) as a consequence of the value of the length of a said optical fibre is below a given threshold value.

2. A method according to claim 1, *characterized* **in that** it comprises introduction of an end of the optical fibre (8) in the recess (10) and fixation of the fibre through clamping of a part of the light detector body (7) surrounding the optical fibre (8).

3. A method according to claim 1 or 2, *characterized* **in that** the fibre surface of the end of the optical fibre (8) is melted before introduction of the optical fibre (8) in the recess (10).

4. A method according to any of claims 1-3*, characterized* **in that** the end of the optical fibre (8) is polished before placing it in the recess (10).

5. A method according to any of claims 1-4, *characterized* **in that** the light detector body (7) is produced by injection moulding.

6. A method for producing a set of devices for detecting arcs in electric devices or installations, in which for each device of said set a substantially solid light detector body (7) of a light damping and light spreading material is provided with a recess (10) for receiving an optical fibre (8) adapted to conduct light directed thereagainst through the light detector body (7), *characterized* **in that** at least some of the devices of said set are provided with a said optical fibre (8) of different length and said recess (10) of each device is provided with a depth being dependent upon said length of the optical fibre associated therewith, so that said depth increases with an increasing optical fibre length and said devices of the set have all substantially the same sensitivity, and that devices of said set having a recess with a depth below a given threshold value are provided with a substantially opaque cover member (13) onto a portion of the light detector body (7) thereof.

### Patentansprüche

1. Verfahren zum Herstellen einer Einrichtung zum Detektieren von Lichtbögen in elektrischen Einrichtungen oder Anlagen, bei welchem ein im Wesentlichen fester Lichtdetektorkörper (7) aus einem Licht dämpfenden und Licht streuenden Material mit einer Vertiefung (10) zum Aufnehmen einer Lichtleitfaser (8) versehen wird, die geeignet ist, Licht, das darauf gerichtet ist, durch den Lichtdetektorkörper (7) hindurchzuleiten, **dadurch gekennzeichnet, dass** die Tiefe der Vertiefung (10) gewählt wird, während die Länge der Lichtleitfaser (8) berücksichtigt wird, um die Empfindlichkeit der Einrichtung im Wesentlichen unabhängig von der Länge zu machen, indem die Tiefe mit zunehmender Länge zunehmend gemacht wird, und dass ein im Wesentlichen lichtundurchlässiges Abdeckelement (13) auf einen Abschnitt des Lichtdetektorkörpers (7) aufgebracht wird, wenn die Tiefe der Vertiefung (10) als eine Folge des Werts der Länge der Lichtleitfaser unter einem gegebenen Schwellenwert liegt.

2. Verfahren nach Anspruch 1, **dadurch gekennzeichnet, dass** es eine Einführung eines Endes der Lichtleitfaser (8) in die Vertiefung (10) und eine Fixierung der Faser durch Klemmen eines Teils des Lichtdetektorkörpers (7) umfasst, welcher die Lichtleitfaser (8) umgibt.

3. Verfahren nach Anspruch 1 oder 2, **dadurch gekennzeichnet, dass** die Faseroberfläche des Endes der Lichtleitfaser (8) vor der Einführung der Lichtleitfaser (8) in die Vertiefung (10) angeschmolzen wird.

4. Verfahren nach einem der Ansprüche 1 bis 3, **da-**

**durch gekennzeichnet, dass** das Ende der Lichtleitfaser (8) poliert wird, bevor es in der Vertiefung (10) angeordnet wird.

5. Verfahren nach einem der Ansprüche 1 bis 4, **dadurch gekennzeichnet, dass** der Lichtdetektorkörper (7) durch Spritzguss hergestellt wird.

6. Verfahren zum Herstellen eines Satzes von Einrichtungen zum Detektieren von Lichtbögen in elektrischen Einrichtungen oder Anlagen, bei welchem für jede Einrichtung des Satzes ein im Wesentlichen fester Lichtdetektorkörper (7) aus einem Licht dämpfenden und Licht streuenden Material mit einer Vertiefung (10) zum Aufnehmen einer Lichtleitfaser (8) versehen wird, die geeignet ist, Licht, das darauf gerichtet ist, durch den Lichtdetektorkörper (7) hindurchzuleiten, **dadurch gekennzeichnet, dass** zumindest einige der Einrichtungen des Satzes mit Lichtleitfasern (8) von unterschiedlicher Länge versehen werden und dass die Vertiefung (10) jeder Einrichtung mit einer Tiefe versehen wird, die von der Länge der dieser zugeordneten Lichtleitfaser abhängig ist, so dass die Tiefe mit einer zunehmenden Lichtleitfaserlänge zunimmt und die Einrichtungen des Satzes alle im Wesentlichen die gleiche Empfindlichkeit aufweisen, und dass Einrichtungen des Satzes, die eine Vertiefung mit einer Tiefe unter einem gegebenen Schwellenwert aufweisen, mit einem im Wesentlichen lichtundurchlässigen Abdekkelement (13) auf einem Abschnitt des Lichtdetektorkörpers (7) davon versehen werden.

## Revendications

1. Procédé pour produire un dispositif pour détecter des arcs dans des dispositifs ou installations électriques, dans lequel un corps de détecteur de lumière sensiblement plein (7) d'un matériau amortisseur de lumière et disperseur de lumière est pourvu d'un évidement (10) pour recevoir une fibre optique (8) adaptée pour conduire la lumière dirigée vers celle-ci à travers le corps de détecteur de lumière (7), **caractérisé en ce que** la profondeur dudit évidement (10) est choisie en tenant compte de la longueur de ladite fibre optique (8) pour rendre la sensibilité du dispositif sensiblement indépendante de ladite longueur en faisant augmenter la profondeur lors d'une augmentation de ladite longueur, et qu'un élément de couvercle sensiblement opaque (13) est appliqué sur une partie du corps de détecteur de lumière (7) lorsque ladite profondeur dudit évidement (10) en conséquence de la valeur de la longueur de ladite fibre optique est au-dessous d'une valeur de seuil donnée.

2. Procédé selon la revendication 1, **caractérisé en ce qu'**il comprend l'introduction d'une extrémité de la fibre optique (8) dans l'évidement (10) et la fixation de la fibre par serrage d'une partie du corps de détecteur de lumière (7) entourant la fibre optique (8).

3. Procédé selon la revendication 1 ou 2, **caractérisé en ce que** la surface de fibre de l'extrémité de la fibre optique (8) est fondue avant introduction de la fibre optique (8) dans l'évidement (10).

4. Procédé selon l'une quelconque des revendications 1 à 3, **caractérisé en ce que** l'extrémité de la fibre optique (8) est polie avant placement de celle-ci dans l'évidement (10).

5. Procédé selon l'une quelconque des revendications 1 à 4 **caractérisé en ce que** le corps de détecteur de lumière (7) est produit par moulage par injection.

6. Procédé pour produire un ensemble de dispositifs pour détecter des arcs dans des dispositifs ou installations électriques, dans lequel pour chaque dispositif dudit ensemble un corps de détecteur de lumière sensiblement plein (7) d'un matériau amortisseur de lumière et disperseur de lumière est pourvu d'un évidement (10) pour recevoir une fibre optique (8) adaptée pour conduire la lumière dirigée vers celle-ci à travers le corps de détecteur de lumière (7), **caractérisé en ce qu'**au moins certains des dispositifs dudit ensemble sont pourvus de ladite fibre optique (8) de longueur différente et ledit évidement (10) de chaque dispositif est pourvu d'une profondeur étant dépendante de ladite longueur de la fibre optique associée à celui-ci, de sorte que ladite profondeur augmente lors d'une augmentation de longueur de fibre optique et lesdits dispositifs de l'ensemble ont tous sensiblement la même sensibilité, et que les dispositifs dudit ensemble ayant un évidement ayant une profondeur inférieure à une valeur de seuil donnée sont pourvus d'un élément de couverture sensiblement opaque (13) sur une partie du corps détecteur de lumière (7) de celui-ci.

FIG 1

FIG 2

FIG 3

FIG 4

**EP 1 166 304 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8051708 A